# EUROPEAN PATENT SPECIFICATION

(11) **EP 3 924 715 B1**
(45) Date of publication and mention of the grant of the patent: **24.07.2024**
(21) Application number: 20703496.8
(22) Date of filing: 13.02.2020
(51) Int. Cl.: G01N 9/36, G01F 23/292

(54) **DEVICE AND METHOD FOR MEASURING BULK AND/OR TAPPED DENSITY, AS WELL AS PACKING DYNAMICS**
VORRICHTUNG UND VERFAHREN ZUR MESSUNG DER SCHÜTT- UND/ODER STAMPFDICHTE SOWIE VON PACKUNGSDYNAMIK
DISPOSITIF ET PROCÉDÉ DE MESURE DE DENSITÉ EN VRAC ET/OU TASSÉE, AINSI QUE DE LA DYNAMIQUE DE TASSEMENT

(30) Priority: 14.02.2019 EP 19157284
(43) Date of publication of application: 22.12.2021
(73) Proprietor: Granutools, 4340 Awans (BE)
(72) Inventor: LUMAY, Geoffroy, Paul, Eric, 4051 Vaux-sous-chèvremont (BE); FRANCQUI, Philippe, 1030 Bruxelles (BE); PIRARD, Simon, Jean, Ghislain, 4140 Sprimont (BE)
(74) Representative: Calysta NV
(86) International application number: PCT/EP2020/053744
(87) International publication number: WO 2020/165336

(56) References cited:
- WO-A1-95/10030
- CN-A- 105 486 612
- CN-U- 207 908 010
- US-A1- 2018 299 317
- GRANUTOOLS TV: "Granutools - Presentation of the GranuPack", 5 November 2018 (2018-11-05), pages 1 - 4, XP054979412, Retrieved from the Internet <URL:https://www.youtube.com/watch?v=asqmkHD-x1M> [retrieved on 20190522]

## Description

The present invention relates to a device, method and computer program for measuring bulk and/or tapped density as well as packing dynamics.

The bulk density of a powder sample is the ratio of the mass of a powder sample and to the volume of the same powder sample. It is typically expressed in g/ml and depends not only on the powder particles, but also on the shape of particles, the interparticulate interactions between the powder sample particles. Typically, the bulk density is measured according to the European Pharmacopoeia chapter 2.9.34.

The tapped density is obtained by mechanically tapping a powder sample. The mechanical tapping of the powder sample results typically in a volume reduction of the powder sample, which is measured over time until little further volume change is observed for the powder sample. Accordingly, the tapped density is calculated as being the predetermined mass of the powder sample and the volume of the powder sample when very little volume change is observed upon tapping. The European Pharmacopoeia chapter 2.9.34. also describe a generic method for measuring the tapped density of a powder sample.

In the state of the art, the tapped density is measured by moving a vessel filled with the powder sample with a driving mechanism up and down. A distance measuring device inserted in the top opening of the vessel and positioned above the powder bed measures the distance of the distance measuring device to the powder bed and determines thus the height of the powder bed in the vessel after each tap. With the knowledge of the height of the powder, the volume and the density of the powder can be determined. Such a device allows to measure the bulk and/or tapped density as well as packing dynamics of a powder sample. Indeed, the device measures first the initial distance between a first reference point preferably in the distance measurement device and a second point which can be a point of the uppermost surface of the powder sample for allowing one to calculate the height of the powder sample contained in the vessel. The device may be for instance connected to a processing unit which can calculate the initial density of the powder device thanks to the predetermined mass on the sample powder. Upon operation, the vessel encounters several moves up and down, the so-called taps, and the distance between the first reference point and the second point, moving together with the uppermost surface of the powder bed sample is recorded overtime and taps. After a predetermined amount of taps, the distance between the first reference point and the second point reaches a quite constant value between sequential taps. The mass of the powder sample divided by the volume of the sample after several tapping gives the tapped density. Such a device is know in the art, and has been for example commercialized under the trade name Granupack of company Granu tools.

While being considered as one of the most accurate tool duly automatized and reducing as much as possible the human factor influencing the quality of the measurement of the tapped density, this known apparatus has an inductive sensor for measuring the distance between the first reference point and the second point. Accordingly, the apparatus requires the presence of a cover element on the top of the powder sample having at least a metallic layer. The thickness of the cover element is therefore to be taken into account for calculating the height of the powder sample contained in the vessel and subsequently deriving the volume of the powder sample to finally calculate the density based on the predetermined mass of the powder sample. In devices where inductive sensors are used to measure the distance between the inductive sensor and the second point (which latter is displaced overtime downwards thanks to the compaction effect of the tapping movement), this distance should be kept as short as possible, otherwise the accuracy of the measurement is drastically negatively impacted.

Further, it has appeared a need on the market to have a tool allowing to make it possible to measure the bulk and tapped density of a powder sample at different temperatures and not only at ambient temperature without being too much detrimental for the accuracy of the measurement. Inductive sensors are heat sensitive and do not make it possible to keep accurate distance measures upon high temperature and if the bulk or tapped density is to be measured at 200°C or even more, the sensor is too much exposed to the temperature and become strongly damaged as it must be kept close to the powder sample.

The Chinese patent application CN105486612 discloses a device for measuring a bulk density and a tapped density of a powder sample under different environmental conditions. The device comprises a closed box with a temperature element for controlling the temperature in the box for measuring the powder under different temperatures. The box comprises further a table on which a measuring cylinder can be placed. To measure the tapped density, the measuring cylinder is filled with the powder sample and a driving mechanism moves the table with the measuring cylinder up and down. An optical powder bed height sensor is arranged outside of the box on a first side of the box and a reflector is arranged on a second opposite side of the box. The sensor could be a laser sensor which is moved upwards until the laser reaches the height of the top of the powder in the measuring cylinder such that the laser reaches on the other side of the box and is reflected by the reflector back to the laser sensor. The height of the laser sensor corresponds then to the height of the powder sample. The sensor has been placed outside the box such that the sensor is not influenced by the heat in the box. However, the present solution determines the height of the powder bed mechanically by the position of the sensor, when it receives the reflected laser. The resolution of this method is not very good and does not provide a very good measurement of the tapped density.

US2018/299317A1, CN207908010U and WO95/1003030A disclose tank filling measurements based on vertically arranged lasers measuring a distance.

The present invention encounters to solve at least a part of these drawbacks by providing a device allowing to measure the bulk and tapped density of a powder sample over a broad range of temperatures comprised between -80°C and 300°C while keeping a reasonable accuracy of the bulk and tapped density measurement.

To solve this problem, it is provided a device for measuring a bulk and/or tapped density according to claim 1, a method for measuring automatically bulk and/or tapped density and/or packing dynamics of a powder sample according to claim 13 and a computer program according to claim 17.

The laser distance measuring device can be arranged at a sufficient distance from the powder bed to avoid the negative influence of the temperature of the powder sample, but nevertheless provide a very high accuracy/resolution for measuring the distance. The device, method and program according to the present invention allows to measure the bulk and/or tapped density of a powder sample over a broad range of temperatures comprised between - 80°C and 300°C while keeping a reasonable accuracy of the bulk and tapped density measurement. According to the present invention, it has been identified that it is possible to space the sensor and therefore increase the distance strongly between the sensor (first reference point) and the second point, wherein the second point represents the height of the powder sample in the vessel (displaced overtime downwards thanks to the compaction effect of the tapping movement) without impacting the accuracy of the bulk/tapped density. While the measurement of the laser distance measuring device of the state of the art emits the laser horizontally to mechanically measure the height of the powder sample, the present invention uses a downward oriented laser light ray to (optically) measure the above-described distance. This has several advantages. The laser must not traverse the walls of the housing and of the vessel which could influence the laser ray but can enter directly in the top opening of the vessel. In addition, the distance measurement allows an optical measurement which compared to mechanical measurements have a significantly improved accuracy. The use of laser triangulation is particular suitable for measuring larger distances with a high resolution.

The dependent claims refer to further embodiments of the invention.

In one embodiment, the laser distance measuring device has a distance of 150 mm or more from the second point, in particular above the second point, when measuring the distance between the first point and the second point, or in other wordssaid laser distance measuring device having a measurement position where the first reference point (located e.g. at an intersection between a housing edge of a housing of the laser distance measuring device and the laser light ray) is above the vessel and where the distance between the second point and the first reference point is 150 mm or more, preferably comprised between 150 mm and 300 mm. Laser distance measurement devices are very sensitive to temperature changes. The distance of 150 mm or more allows to significantly reduce the influence of the temperature of the powder sample on the laser distance measurement device. Indeed, the location of the laser distance measuring device has been optimized to be exposed at a temperature range between -10°C and 50°C, when the powder sample is adjusted to temperatures comprised between - 80°C and 300°C, i.e. being far enough to not be too much warmed or cooled by the radiant heat from the warmed/cooled powder sample. The location of the laser distance measuring device is defined by the distance between the first reference point and the second point. Preferably, the location of the laser distance measuring device is such that the distance between the first reference point and the second point is smaller than 300 mm. The range between 150 mm and 300 mm showed an optimum between the influence from the heat and the influence from the distance on the resolution of the distance measurement. It was therefore surprising to be able to carry out distance measurement with high accuracy with a distant sensor located at a distance from the second point (displaced overtime downwards thanks to the compaction effect of the tapping movement) while keeping enough sensitivity. According to the present invention, it has been made possible to reach high sensitivity to detect small distance changes between two consecutive taps for providing a compaction curve and reduce the temperature effect in the sensor due to radiant heat from the warmed or cooled vessel by the temperature adjusting means.

In one embodiment, the laser distance measuring device is configured to emit the laser ray and to receive the emitted laser ray reflected back from the second point, wherein the laser distance measuring device is configured to receive the reflected laser ray at different incidence angles and/or at different incidence positions, wherein the different incidence angles and/or different incidence positions indicate the distance between the first point and the second point.

In one embodiment, said laser distance measuring device having a resolution comprised between 25 µm and 60 µm and/or a measuring range comprised between 60 mm and 350 mm. This resolution holds in particular for the location of the distance measuring device at a distance between 150 mm and 300 mm (between the first reference point and the second point) and/or when the laser distance measuring device is exposed to said temperature range between -10°C and 50°C. There are only very few laser distance measurement devices which can measure with such a distance with such a high resolution. Thus, notwithstanding the measurement at extreme measurement temperatures, the accuracy of the distance measurement is kept high.

The resolution and the range of measurement distance reflect together the stability index with respect to temperature of about 0,005 to 0,05 % by °C, preferably between 0,007 and 0,03 % by °C, more preferably between 0,008 and 0,02 % by °C and even most preferably between 0,009 and 0,012% by °C.

In one embodiment, the first reference point is located at an intersection between the distance measuring device, preferably its housing edge and the laser light ray.

In one embodiment, the temperature adjusting means is arranged in the vessel. This allows to heat or cool only the powder without loosing too much energy in heating up the whole environment of the housing of the device for measuring the bulk or tapped density. In particular, the influence of the measurement temperature on the distance measurement device which is preferably kept in the same housing is reduced further. The temperature adjusting means in the vessel is particular advantageous, if the distance measurement device is arranged at a distance of more than 50 mm, preferably of more than 100 mm, preferably of 150 mm and more from the second point and/or if the distance measurement means is arranged in the same (sealed) housing with the vessel, because the temperature influence on the distance measurement device can be kept low due to the local application of the measurement temperature at the vessel, even if the distance measurement means is arranged in the same housing (of the device) with the vessel.

In one embodiment, said temperature adjusting means provided to cool or warm said vessel comprises a cooling or heating jacket around a lateral wall of the vessel. This allows a very good adjustment or control of the measurement temperature of the powder sample in the vessel without influencing the laser distance measurement device (too much). Preferably, the jacket is covered/surrounded/coated by an insulating layer. This increases further the temperature adjustment effect, reduces the power consumption and reduces the temperature effect on the laser distance measurement device. The cooling or heating jacket can be for example a warming mantle with an electric resistance or a double envelope in which a heat transfer fluid circulates or even a peltier cell. In one embodiment, a correction factor is applied to the density calculated based on a temperature measurement for taking into account the volume change of the vessel upon the influence of the heating/cooling.

In one embodiment, the distance measuring device is provided for measuring a series of distances between the first reference point and the second point.

In one embodiment, the distance measuring device is provided to output a signal containing the value of the measured distance, preferably of the values of the distances of said series of distances. The distance is preferably output to a processing unit or a computer program running on the processing unit (short also processor). An automated bulk/tapped density measurement device is providing a compaction curve to the user, showing the height, volume or density variation over time and tapping movements (taps). The variation over time between two consecutive taps are very small, requiring high accuracy of the distance measurement to provide compaction curve. When the compaction curve reaches a plateau, i.e. when the density does not vary very much over a series of taps, it is said that the density at this period of time or after a series of taps is the tapped density.

In one embodiment, the powder sample comprises a predetermined weight or mass. The predetermined weight is preferably input to the processor or the computer program for calculating the density from the distance, height or volume. The processor or the computer program is configured to calculate the (bulk, tapped or other) density of the powder sample based on the predetermined weight. The predetermined weight could be input via a user interface. In an alternative embodiment, the predetermined weight of the powder in the vessel could be measured by the device and input from the device. In a further embodiment, the predetermined weight could be fixed and known by the processor or the computer program.

In one embodiment, said driving mechanism is located under the vessel, preferably below a bottom platform on which said vessel is located. Said driving mechanism is preferably connected to the vessel by a coupling shaft provided for gliding through an orifice of said bottom platform and/or for impairing a series of tap movements to the vessel. The vessel is preferably located on a bottom platform. The driving mechanism is preferably located in a separated cavity having as top wall, the bottom platform upon which said vessel is located. The bottom platform is preferably perforated for forming an orifice through which said coupling shaft goes through to connect the vessel to the driving mechanism. The coupling shaft can glide through the orifice up and down upon action of the driving mechanism. The isolation of the driving mechanism in a separated cavity allows to prevent powder contamination of the driving mechanism which can impact negatively its proper operation, but also isolate the driving mechanism from the radiant heat originating from the warmed/cooled vessel. In a preferred embodiment, the coupling shaft is ended by a broader top portion having a diameter greater than the diameter of the shaft. The top portion comprises a peripheric shoulder for forming two flanges, a first flange and a second flange, preferably made as a monobloc piece. The top portion is located at the distal end of the coupling shaft and proximal end of the coupling shaft is in contact with the driving mechanism.

In a preferred embodiment, the vessel is an open-end tube without bottom portion and the first flange of the top portion of the coupling shaft is the bottom portion of the vessel. To this end, the first flange comprises a groove for accommodating an O-ring and has a diameter slightly lower than the diameter of the vessel. The first flange is tightly closing the vessel. The second flange is located between the first flange and the shaft of the coupling shaft and has a diameter preferably greater than the first flange. When the vessel is closed by the coupling shaft, the second flange is bearing surface for the wall of the vessel and reinforce the assembly of the vessel and the coupling shaft.

Further, the second flange having a diameter greater than the shaft diameter and therefore of the orifice through which the shaft glide up and down when in movement upon operation of the driving mechanism, the second flange forms additional protection against powder contamination of the driving mechanism, acting as an umbrella.

In a variant, the vessel is a tube having a bottom portion, which is connected to the coupling shaft by conventional means.

Preferably, the driving mechanism comprises a cam member rotating around an horizontal axis. Said cam member can be a single lobe or a multilobe cam member. The multi lobe cam member comprising at least 2 lobes, preferably at least 3 lobes, more preferably at least 4 lobes. Said coupling shaft is preferably connected to the vessel following the rotating movement of the cam member. Preferably each lobe has a first portion having a soft curved profile provided to impair an upward movement to the vessel and a second portion having a substantially straight profile provided to impair a downward drop to the vessel. The vessel is subjected to a predetermined potential energy and to the gravity upon falling downwards, each lobe being designed to simulate a tapping movement to the vessel upon rotation of the cam member, each revolution of the cam member conferring a number of tapping movement equal to the number of lobes of the cam member.

Advantageously, said device comprises a housing accommodating said vessel and said measuring device. The housing has preferably a bottom surface, which is preferably made by the above-mentioned bottom platform below which the driving mechanism is located.

In a particularly preferred embodiment, the device according to the present invention for measuring a bulk and/or tapped density and/or packing dynamics comprising a processing unit connected to the laser distance measuring device and provided to receive each distance measurement data performed by the laser distance measuring device, calculate the density of the powder corresponding to each distance measurement data and plotting the density corresponding to each tapping movement for drawing a compaction curve allowing to calculate the Hausner ratio (Hr) and other flowing and powder characteristics herein described as packing dynamics. The packing dynamics is quantified with the number of taps n_{1/2} needed to reach the density (ρ(500) + ρ(0))/2 corresponding to one half of the compaction range. A low value of n_{1/2} corresponds to a fast packing dynamics. The Hausner ratio Hr is related to the compaction ratio and is calculated by the equation Hr = ρ(500) / ρ(0) , where ρ(0) is the initial bulk density and ρ(500) the tapped density computed obtained after 500 taps.

Advantageously, the device according to the present invention further comprises a temperature probe provided to measure the temperature of the vessel or of the powder sample. This allows to control the temperature of the powder sample to the measurement temperature. The measurement online of the temperature allows to control that the measurement is done at the whished temperature for measuring the bulk/tapped density at a predetermined temperature.

In a preferred embodiment, the processor or the computer program is configured to receive the measurement temperature. The measurement temperature could be received from the device, preferably from the temperature probe or the temperature adjusting means, which sends the measurement temperature to the processor or computer program. However, it is also possible that the measurement temperature is input via a user interface. The processor or computer program is preferably configured to calculate the (bulk, tapped or other) density of the powder sample based on the measurement temperature. The measurement temperature could be used to correct the calculated density by the temperature influence of the measurement temperature on the section of the vessel (and thus on the volume of the powder in the vessel based on the measured distance(s)) and/or on the laser distance measurement device.

In a preferred embodiment, the processor or the computer program is configured to control the measurement temperature of the temperature adjusting means. The measurement temperature can be controlled for example based on the measured temperature at the temperature probe.

For some tapped/bulk or packing dynamics calculations, the processor does not need to take into account the dilatation/constriction of the vessel because the impact is not significant on the measurement. However, for some measurement, especially when the tapped/bulk or packing dynamics calculation is performed along a heating cycle or a heating cycle, the online temperature measurement is required to allow the processor to take into account the dilatation /constriction of the vessel upon cooling/heating. By having online temperature measurement, volume correction can be applied to the density calculation performed by the processor or not depending on the application.

In one embodiment, the processor or computer program is configured to receive a series of n distance measurements from the distance measurement device. Preferably, the processor or computer program is configured to calculate the tapped density from a distance measurement of the n distance measurements which fulfils a certain tap condition. The tap condition is preferably, when two successively measured or received distance measurements (or any values like height, volume or density of the powder sample determined from the distances) are changing less than a threshold or when the measured distances (or any values like height, volume or density of the powder sample determined from the distances) is reaching an asymptote. However, the tap condition could be also a maximum number of taps or a maximum time. Preferably, the last (or one of the last) distance measurement after the tap condition is fulfilled for calculating the tapped density of the powder sample. Preferably, the n distance measurement correspond to n taps. However, it is also possible that between the n taps or after the n taps there are further taps not counted in the n taps (i.e. there are actually more taps than distance measurements) or that between and/or after the n distance measurements, there are more distance measurements not counted in the n distance measurements (i.e. there are actually more distance measurements than taps). The latter could make sense to increase the measurement accuracy by average two distance measurements per tap. Preferably, the computer program or processor is configured to display a plot with the n measured distances or n values determined from the n measured distances over the number of taps or the time. The values determined from the n measured distances could be the heights, the volumes or the densities of the powder sample in the vessel.

In a further preferred embodiment according to the present invention, the laser distance measuring device is fixed on a support connected to a vertical shaft, said support being able to rotate partially around one vertical axis in order to align the laser light axis with the second point and/or being vertically movable along said vertical shaft to adjust the height of the first reference point with respect to the second point, thereby ensuring smooth movement to the laser distance measuring device and accurate positioning of the laser distance measuring device within the measurement ranges according to the present invention. The support is preferably substantially horizontal.

In another further preferred embodiment, the device according to the present invention comprises a cover element provided for being accommodated within said vessel, having a top and a bottom wall substantially flat and parallel one to each other, each section of said cover element being at most lower than said predetermined section, preferably constant section of said vessel, said cover element being provided to be placed upon said powder sample when located in the vessel, the top wall comprising the second point, said cover optionally comprises a target area, enclosing said second point.

The cover element 10 allows to ensure that the powder bed has a flat and horizontal upper surface for making sure the second point is positioned at a distance representative of the height of the powder bed in the vessel. It has further a role to isolate the vessel content from the environment and avoid heating loss. The cover element further contribute to reproductivity of the measures as it confers the powder bed an horizontal and flat surface. Thanks to this, the measurement must not mandatorily be done at the center of the bed or the cover element 10, at any point of the upper surface a the cover element, the distance is almost the same, simplifying the alignment of the laser distance measuring device and the second point.

When a cover element 10 is present, the processor or the computer program takes into account the height of the cover element to calculate the height of the powder bed in the vessel.

In another embodiment, the second point is directly on the powder bed which simplifies the measurement. The laser has the advantage to be independent from the presence of a metal on the powder bed.

In one embodiment, a density of the sample of powder is calculated based on the height of the sample powder bed calculated from the distance between the first reference point and the second point, by a processing unit, said density being calculated by dividing the weight of the sample of powder by the volume, derived from the height of the sample powder in the vessel.

In one embodiment, the density of the sample of powder is calculated for each distance of the series of n distances and preferably plotted towards each tap of said series of n taps conferred to the vessel for providing a compaction curve.

In one embodiment, an introduction tube is inserted inside the vessel before pouring the sample of powder, said sample of powder being poured in the introduction tube, which is lifted up at a substantially constant and low speed, letting the sample of powder in the vessel after lifting up the introduction tube.

In one embodiment, said introduction tube is inserted in one orifice of the above described support, said support having a rotation center, and wherein the distance along an horizontal plan between the rotation center and a center of said introduction tube is equal to the distance between a vertical axis passing through said first reference point of the laser distance measuring device and said rotation center.

Other embodiments and advantages will be described in the dependent claims and will be derived from the non-limitative description, and by making reference to the drawings and the examples.

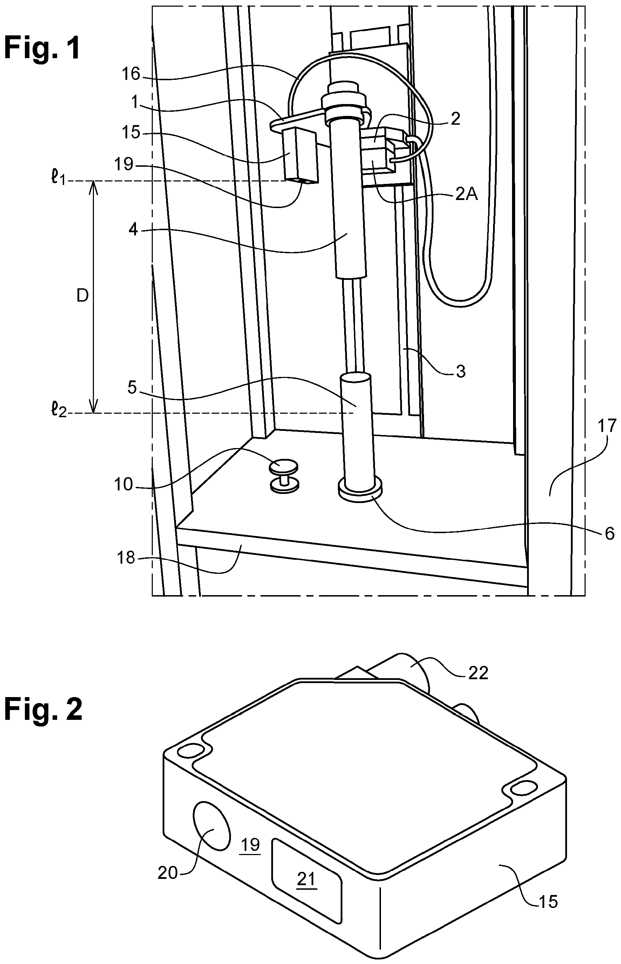

In the drawings, figure 1 is a general view of the device according to the present invention.
Figure 2 is a perspective view of the laser distance measuring device.
Figure 3 is an exploded schematic view of the vessel (cross-section of the vessel) and the lateral view of the coupling element.
Figure 4a is a lateral view of the cover element and Figure 4B is a top view of the cover element.
Figure 5 is a perspective view of a prehension means.
Figure 6 is a perspective view of another prehension means.
Figure 7 is a front view of the introduction tube.
Figure 8 is a cross section of the came member.
Figure 9 shows compaction curves obtained from the examples.

In the drawings, the same reference numbers have been allocated to the same or analog element

The term "powder sample" according to the present invention means a solid sample able to flow, made by particles or grains having a mean particle size d₅₀ comprised between 1 nm and 5 mm. The vessel, for example a tube can be sized with respect to the mean particle size of the solid sample, such as to have a diameter at least 10 times the mean particle size. For instance, for solid sample having grains having a mean particles size d₅₀ comprised between 1 nm and 100 µm, it is preferable to use a diameter of the vessel of 26 mm. For mean particle size comprised between 1 and 5 mm, the diameter of the vessel will be preferably of at least 50 mm.

As it can be seen in figure 1, the present invention relates to a device for measuring bulk and/or tapped density as well as packing dynamics which comprises a bottom basis 18 comprising a platform and enclosing a cavity and upon which a housing 17 is mounted. The platform is the bottom platform of the housing. Along the rear wall of the housing, a vertical support element is present having a guiding system made of two rails 3. A motorized support 2 is provided to move upwards and downwards in the two rails 3 upon the action of a motor (not shown). A substantially horizontal support 1 in the form of a rotatably plate 1 is mounted on the motorized support 2. The rotatably plate 1 has a rotation center through which a vertical axis passes, being the pivot axis and is able to horizontally rotate manually or upon the action of another motor 2A different from the motor for moving upward and downwards the motorized support 2.

The device according to the present invention also comprises a vessel 5 provided for containing a sample of powder. The vessel 5 is, in this preferred embodiment, closed by a coupling element having a flange 6 supporting the wall of the vessel 5. The vessel has a predetermined section, for example a substantially constant section over height. The vessel 5 has an opening at the top for inserting the powder and/or for measuring the height of the upper surface of the powder bed. The vessel 5 is preferably closed laterally (by at least one lateral wall) and/or by a bottom wall (here provided by the coupling element or the flange 6).

A distance measuring device 15 is fixed on the rotatable plate 1. The distance measuring device 15 is a laser distance measuring device 15. The laser distance measuring device 15 is preferably contained in a housing. The housing of the device 15 has preferably a housing edge 19.

The laser distance measuring device 15 is connected to a processing unit by a connection 16 which is provided to output data of the measured distance and send the measured distance to the processing unit (not shown).

A cover element 10 is foreseen as an accessory of the device according to the present invention.

An introduction tube 4 is accommodated in a recess formed in the support rotatable plate 1, said introduction tube being an hollow tube (without bottom wall).

Upon operation, the operator weighs a sample of powder and introduces the powder sample in the vessel 5 thanks to the introduction tube 4.

During this loading operation, the introduction tube 4 is glided inside the vessel 5 and the rotatable plate 1 is in the loading position. The rotatable plate 1 is rotated until the instruction tube 4 is aligned above the vessel 5 and is moved downwards until the introduction tube 4 enters the vessel 5. The powder is poured into the introduction tube 4 by the operator.

The rotatable plate 1 is afterwards moved upwards with the introduction tube 4, thereby leaving the powder sample in the vessel 5 in a very reproducible way and is rotated into its measuring position wherein the laser distance measuring device 15 is aligned above the vessel 5.

When the powder sample is located in the vessel 5, it forms a powder bed having an upper surface. Preferably, the cover element 10 is introduced in the vessel 5 after the powder has poured into the vessel 5 and/or before the distance is measured.

A driving mechanism (not shown) is located in the cavity of the basis 18 and is provided to impair upwards and downwards movement (taps) to the vessel to simulate tapping movement to the vessel towards the bottom of the vessel 5.

When applying taps to the vessel 5 and hence to the powder sample contained therein, the particles of the powder sample are packed one towards each other and the volume of the powder is reduced over time and/or over the number of taps.

The laser distance measuring device 15 is provided for measuring a distance D between a first reference point and a second point at level l2 representing the height of the upper surface of the powder bed in the vessel 5. The distance D can be any distance from which the height of the upper surface of the powder bed in the vessel 5 can be determined. Preferably, the distance D is the distance between the laser distance measuring device 15 (first point 11) and the second point l2. By knowing the distance between the first point l1 and the bottom surface of the powder in the vessel 5 and/or by knowing the distance of the second point l2 to the top surface of the powder bed (if any), the height of the powder in the vessel 5 can be calculated. From the height of the powder in the vessel 5, the volume of the powder in the vessel 5 can be calculated (with the knowledge of the constant sectional surface of the vessel 5 or more generally of the form of the vessel 5). From the volume of the powder in the vessel 5, the density of the powder 5 can be calculated, if the weight of the powder in the vessel 5 is known. Thus, the distance D, the height of the powder in the vessel 5, the volume of the powder in vessel 5 and the density of the powder in the vessel 5 are exchangeable information. Thus, any of those parameters subsequently mentioned can be exchanged by any of the other parameters or any other parameter defining one of those parameters without any deviation from the scope of the present invention.

Preferably, initially the distance D between the first reference point at level l1 and the second point at level l2 to represent the initial height of the powder bed in the vessel 5 is measured (before applying taps to the vessel 5). The initial height will be then converted into an initial volume and/or to an initial density. The initial density corresponds to the bulk density of the sample of powder.

The said second point represents the level l2 of the upper surface of the powder (or powder bed) in the vessel 5. The second point could be any point which depends (in a known way) on the upper surface of the powder bed in the vessel 5. In particular, the second point moves with the upper surface of the powder bed in the vessel 5, when the powder is tapped. The second point can for example be any point of the upper surface of the powder bed in the vessel 5 or any point of an upper surface of a cover element, lying on the powder bed, such as cover element 10 shown in figure 1. The position of the second point horizontally is not relevant, as long as it is still within the vessel 5.

The laser distance measuring device 15 emits downwards a laser light ray in a predetermined direction, preferably, vertical. The first reference point is preferably fixed to the coordinate system of the laser distance measuring device 15. The first reference point is preferably in, at or close to the laser distance measuring device 15. In one embodiment, the first reference point is located at an intersection between the housing edge 19 (level 11) and the laser light ray (see figure 2 for more details).

When taps are applied to the vessel 5, the height of the powder bed changes and the second point (level l2) is moving slowly downwards, upon the effect of the taps. Accordingly, the laser measuring device 15 measures the powder bed height after each tap and hence, a series of distances D between the first reference point (level 11) and the second point (level l2) is measured. The powder bed height after each tap is converted into a volume of the powder bed after each tap and to a density after each tap.

In the illustrated embodiment in figure 1, the laser distance measuring device 15 is provided to output a signal containing a value of each distance D of said series of distances D to a processing unit with the connection 16.

As it can be seen in more detail in figure 2, the laser distance measuring device 15 is contained in a housing having housing edges 19. the laser distance measuring device 15 is configured to emit a laser ray, e.g. through a transmitting hole 20. The housing includes a port 22 to connect the laser distance measuring device 15 to the connection 16 for communication with the processor. The laser distance measuring device 15 comprises further receiver optics configured to receive the reflected laser ray. Further a window 21 is provided for containing receiver optics receiving back the reflected laser ray for measuring the distance to the second point. The second point is preferably the point where the emitted laser ray is reflected back to the receiver optics. The laser distance measuring device 15 is configured to measure a laser value indicating the distance between the laser distance measuring device 15 (first reference point) to the second point. The laser value is an angle of incidence of the reflected laser ray at the receiving optics (laser triangulation). Laser triangulation allows a very high resolution even for longer distances to the second point. to the state of the art used the time of flight of the emitted laser ray. The time of flight could be measured between the time of emission of a laser ray and the time of receiving the reflected laser ray at the receiving optics. However, laser triangulation works much better for the present application and it is very difficult to find a laser distance measuring device 15 working with time of flight measurements with the same resolution at the required distance. The laser distance measuring device 15 has preferably a measuring range which allows measurements distances (between the laser distance measuring device 15 and the reflection point) larger than 60 mm, preferably larger than 70 mm, preferably larger than 80 mm, preferably larger than 90 mm, preferably larger than 100, preferably larger than 110 mm, preferably larger than 120 mm, preferably larger than 130 mm, preferably larger than 140, preferably larger than 150 mm, preferably larger than 160 mm, preferably larger than 170 mm, preferably larger than 180, preferably larger than 190 mm, preferably larger than 200 mm. In one embodiment, the measuring range is comprised between 60 mm and 350 mm. The resolution of the laser distance measuring device 15 (at least in the measurement range) is preferably lower than 200 µm, preferably than 150 µm, preferably than 100 µm, preferably than 90 µm, preferably than 80 µm, preferably than 70 µm, preferably than 60 µm. In one embodiment, resolution of the laser distance measuring device 15 (at least in the measurement range) is between 25 µm and 60 µm.

In the measurement position, the rotatable plate 1 is rotated to align the first reference point above the vessel 5 and/or to emit the laser ray in the vessel 5. The rotatable plate 1 is able to rotate partially around a vertical axis in order to align the laser ray axis with the second point. The laser distance measuring device 15 is as aforementioned vertically movable along said vertical shaft to adjust the height (level l1) of the first reference point with respect to the second point (level l2) with smooth movement and accurate positioning of the laser distance measuring device within the measurement ranges comprised between 60 mm and 350 mm according to the present invention.

The distance between the second point and the first reference point is comprised between 150 mm and 300 mm for any distance D measurement. The distance between the second point and the laser distance measuring device 15 is 150 mm or more for the distance D measurement.

The location of the laser distance measuring device 15 has been optimized to be exposed at a temperature range between -10°C and 70°C, i.e. being far enough to not be too much warmed or cooled by the radiant heat from the warmed/cooled vessel 5. The location of the laser distance measuring device is defined by the distance between the first reference point and the second point, i.e. comprised between 150 mm and 300 mm.

Further, when located at a distance between 150 mm and 300 mm (between the first reference point and the second point), the laser distance measuring device laser distance measuring device is exposed to said temperature range (-10°C and 50°C) and the impact on the accuracy of the measurement is reduced. Indeed, the laser distance measuring device is characterized by a resolution between 25 µm and 60 µm when measuring distances comprised in the range between 60 mm and 350 mm.

The resolution and the range of measurement distance reflect together the stability index with respect to temperature of about 0,005 to 0,05 % by °C, preferably between 0,007 and 0,03 % by °C, more preferably between 0,008 and 0,02 % by °C and even most preferably between 0,009 and 0,012% by °C.

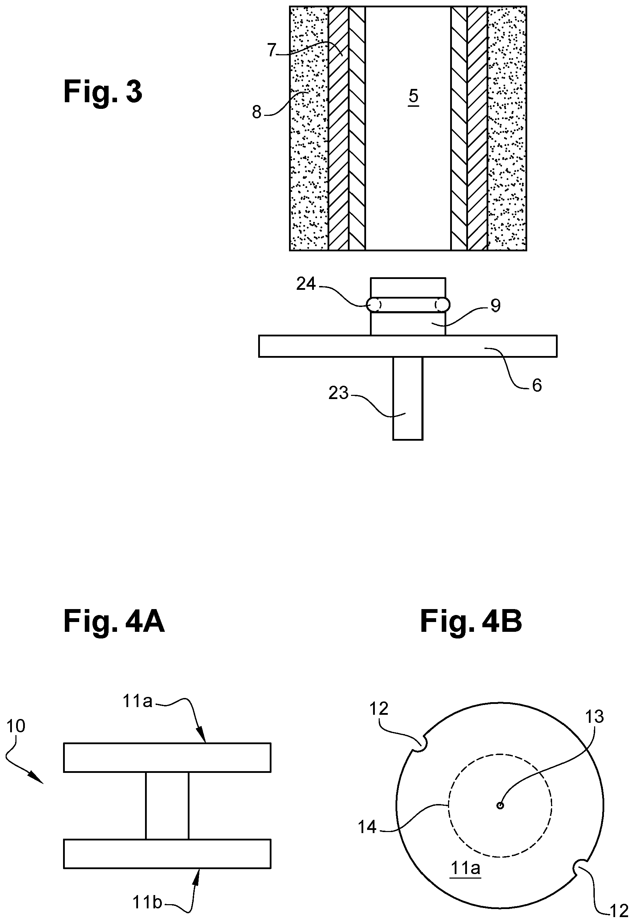

As it can be seen in figure 3, showing in greater details the vessel 5 (in cross-sectional view), the vessel 5 is preferably an end-less tube 5 is provided with temperature adjusting means 7, such as a cooling or heating jacket 7, coated by insulating layer 8. The temperature adjusting means 7 are provided to cool or warm said vessel in order to perform density measurements at a predefined measurement temperature.

The vessel 5 i.e. an end-less tube without bottom portion is closed by a coupling shaft 23 (lateral view). The coupling shaft 23 is ended by a broader top portion (6, 9) having a diameter greater than the diameter of the shaft 23. The top portion comprises a peripheric shoulder for forming two flanges, a first flange 9 and a second flange 6, preferably made as a monobloc piece, more preferably having a rim (not shown). The top portion is located at the distal end of the coupling shaft 23 and proximal end of the coupling shaft 23 is in contact with the driving mechanism.

As it can be seen, the first flange 9 of the top portion of the coupling shaft 23 is the bottom of the vessel 5. To this end, the first flange 9 comprises a groove for accommodating an O-ring 24 and has a diameter slightly lower than the diameter of the vessel 5, while the O-ring has a slightly higher diameter relative to the diameter of the vessel to ensure tightness of the assembly. The first flange 9 is tightly closing the vessel 5. The second flange 6 is located between the first flange 9 and the shaft 23 of the coupling shaft 23 and has a diameter preferably greater than the first flange 9.

When the vessel 5 is closed by the coupling shaft 23, the second flange 6 is bearing surface for the wall (wall of the vessel 5 as such, the heating/cooling jacket 7 and insulating layer 8) of the vessel 5 and reinforce the assembly of the vessel 5 and the coupling shaft 23.

The coupling shaft is introduced in one orifice of the platform of the bottom basis 18, the bottom platform of the housing 17 to contact the driving mechanism located below the bottom platform 18.

Accordingly, the driving mechanism is located under the vessel 5, below a bottom platform 18 on which said vessel 5 is located. The driving mechanism is connected to the vessel by the coupling shaft 23 provided for gliding through the orifice of said bottom platform 18 and for impairing a series of tap movements to the vessel.

While the vessel 5 is located on a bottom platform 18. The driving mechanism is preferably located in a separated cavity having as top wall, the bottom platform 18 upon which said vessel 5 is located. The bottom platform 18 is perforated for forming an orifice through which said coupling shaft 23 goes through to connect the vessel 5 to the driving mechanism. The coupling shaft 23 can glide through the orifice up and down upon action of the driving mechanism. The isolation of the driving mechanism in a separated cavity allows to prevent powder contamination of the driving mechanism which can impact negatively its proper operation, but also isolates the driving mechanism from the radiant heat originating from the warmed/cooled vessel 5.

The second flange 6 of the coupling element has a diameter greater than the shaft diameter and therefore than the orifice through which the shaft glide up and down when in movement upon operation of the driving mechanism and hence the second flange 6 forms additional protection against powder contamination of the driving mechanism, acting as an umbrella.

Figure 4A shows the cover element 10 in greater details. The cover element 10 is provided for being accommodated within said vessel 5, and for lying on the upper surface of the bed powder of the sample. The cover element 10 has a top wall 11a and a bottom wall 11b. The top wall 11a and the bottom wall 11b are substantially flat and parallel one to each other. When a cover element 10 is used, it is preferable that the vessel 5 has a predetermined section, preferably a constant section over height and in such a case, each section of said cover element 10 is at most lower than said predetermined section, preferably constant section of said vessel 5. In this situation, the position of the cover element 10 inside the vessel 5 has no restriction, while when the section of the vessel is not constant, the profile of the cover element 10 should be complementary to the profile of the vessel 5 at the position it is expected the upper surface of the powder bed of the sample be located.

To reduce as much as possible the impact of the weight of the cover element 10 when placed upon the powder bed in the vessel 5, the weight of the cover element 10 should be as low as possible, but nevertheless done in a material not being sensitive to heat.

Accordingly, according to the present invention, it is foreseen the cover element to be a hollow cylinder or two circular plates connected by a central axis to reduce the weight of the cover element 10.

As it can be seen in figure 4B, when the cover element 10 is used, the top wall 11a comprises the second point 13. The cover element 10 optionally comprises a target area 14, enclosing said second point 13. When a cover element 10 is present, the processor takes into account the height of the cover element 10 to calculate the height of the powder bed in the vessel 5.

The cover element 10 ensures that the powder bed has a flat and horizontal upper surface in such a way the second point 13 is positioned at a distance representative of the height of the powder bed in the vessel 5. It has further a role to isolate the vessel content from the environment and avoid heating loss.

The cover element 10 further contribute to reproducability of the measures as it confers the powder bed an horizontal and flat surface. Thanks to this, the measurement should not mandatorily be done at the center of the bed but can be done at any other point, preferably within the target area 14, since at any point of the upper surface of the cover element 10, the distance is almost the same, simplifying the alignment of the laser distance measuring device 15 and the second point 13.

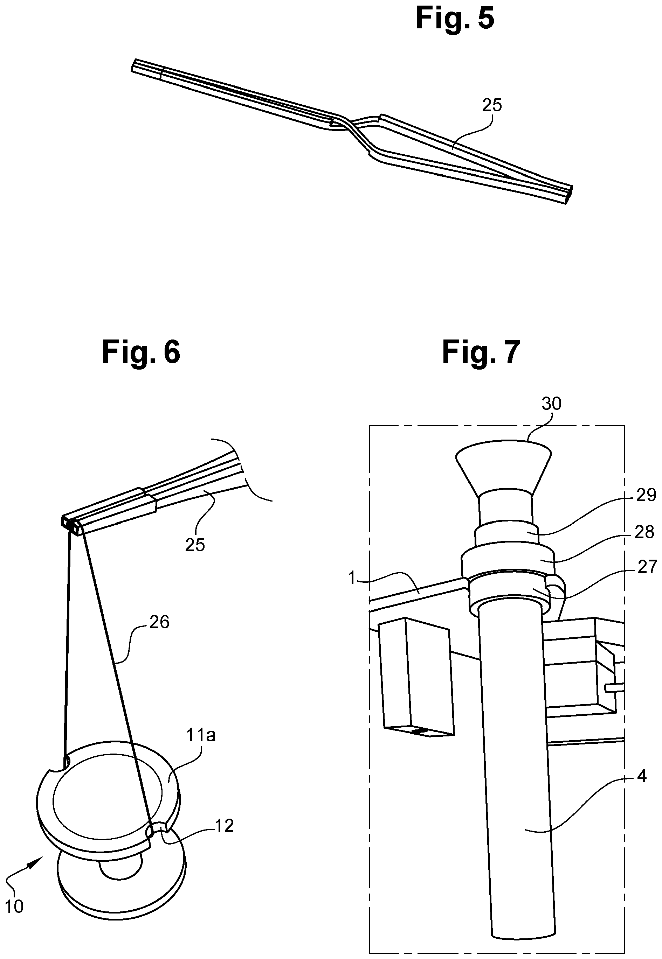

The cover element 10 also comprises two recesses 12 in the top wall to introduce arms of a tweezer, preferably arms of a reverse tweezer. An exemplary tweezer used according to the present invention 25 is illustrated in figure 5.

While the arms of the tweezer 25 can be directly introduced in the recesses of the cover element 10, it is also foreseen according to the present invention to use a portion 26 of yarn, cord, thread, twine and the like to minimize the impact shock on the bed powder when placing the cover element 10 on the top of the sample in the vessel. This embodiment is illustrated at figure 6. When such a portion 26 of yearn, cord, thread, twine and the like are used, one side on the portion 26 is permanently fixed to one arm of the tweezer 25. The cover element 10 is positioned on the bench next to the device according to the present invention. The tweezer 25 is taken by the operator. The portion 26 of the yearn, cord, thread, twine and the like is passed through the recesses 12, passing under the top wall 11a and the opposite side of the portion 26 of yearn, cord, thread, twine and the like is gripped between the two arms of the tweezer 25.

The cover element 10, is then pending from the tweezer 25 and is located by the operator above the bed of powder in the vessel. When carefully placed upon the bed of powder of the sample in the vessel 5, the tweezer 25 is opened, and pulled away from the cover element 10 slowly. The portion 26 of yearn, cord, thread, twine and the like is pulled up from the cover element 10 as a result without perturbating the bed of powder sample.

While not being mandatorily used, the use of the tweezer 25 with the cover element 10 reduce the packing effect that the positioning of the cover element 10 on top of the bed of powder sample may have and reduced the dependency towards the operator agility.

Figure 7 shows the introduction tube 4 in greater details. The introduction tube 4 is a hollow tube 4 without bottom wall i.e. an endless hollow tube. The introduction tube is provided at the upper portion 29 with two flanges 28 and 27 for suspending the introduction tube to the rotatably plate 1. The two flanges 28 and 27 can be two separated elements or a monobloc piece solidarized to an introduction tube 4 or even a monobloc element having an hollow section 4 with two flanges 28, 27.

The two flanges have different diameters and are separated by a shoulder. The two flanges are superimposed on to each other forming a lower flange 27 and a higher flange 28.

The lower flange 27 has a diameter complementary to the diameter of the recess of the rotatable plate 1 in which it is to be inserted before loading the sample. The higher flange 28 has a higher diameter with respect to the lower flange 27, thereby forming a stop during the positioning of the introduction tube 4. The stop retain the introduction tube 4 within the recess of the rotatable plate 1 during the loading step. A funnel 30 is also advantageously used to pour the powder sample in the introduction tube 4.

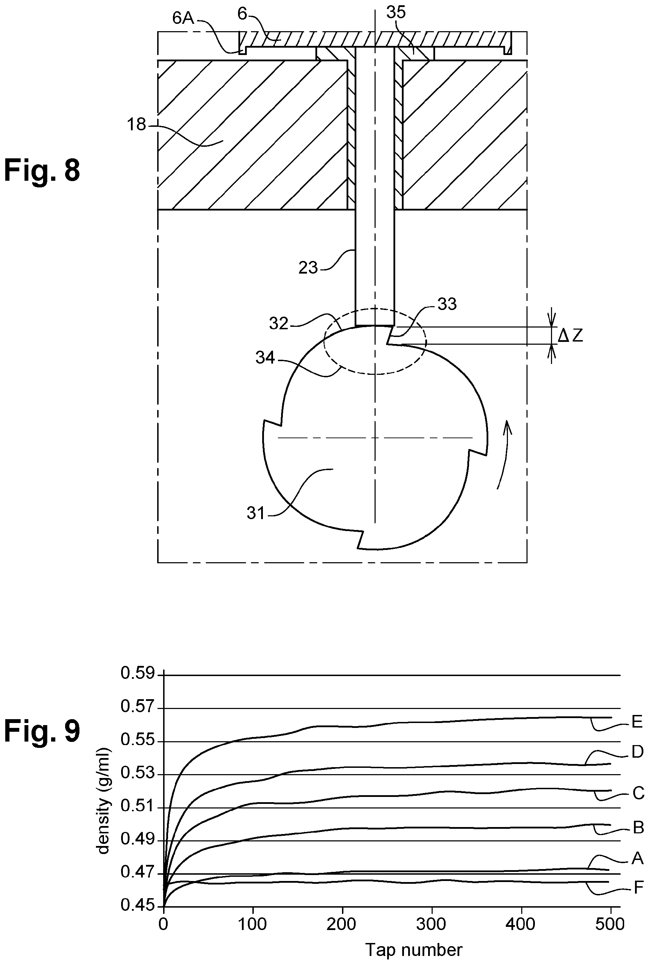

Figure 8 represents the driving mechanism. The driving mechanism comprises a cam member 31 rotating around an horizontal axis. The cam member 31 is a multilobe cam member, which comprises 4 lobes 34 in the illustrated embodiment. The coupling shaft 23, connected to the vessel 5 follows the rotating movement of the cam member 31. Each lobe 34 has a first portion having a soft curved profile 32 provided to impair an upward movement to the vessel and a second portion 33 having a substantially straight profile provided to impair a downward drop to the vessel. Each lobe 34 is designed to simulate a tapping movement to the vessel 5 upon rotation of the cam member 31. According to the present invention, the cam member 31 can be a single lobe, a multilobe profile having at least 2, 3 or 4 lobes.

Each revolution of the cam member 31 confers a number of tapping movement equal to the number of lobes 34 of the cam member. For each passage of a lobe 34, the vessel 5 containing the powder sample rose to a fixed height of ΔZ and performs free falls.

The free fall height is generally fixed to ΔZ between 0,5 mm and 10 mm, preferably between 1 and 5 mm, more preferably between 1 and 3 mm. The distance D between the first reference point (level 11) and the second point (level l2) is measured and the height h of the powder bed is calculated preferably automatically after each tap. From the height h, the volume V of the powder bed of the sample is computed. As the powder sample mass m is known, the density ρ is evaluated and plotted after each tap. The density is the ratio between the mass m and the powder bed volume V.

The Hausner ratio Hr is related to the compaction ratio and is calculated by the equation Hr = ρ(500) / ρ(0) , where ρ(0) is the initial bulk density and ρ(500) the tapped density computed obtained after 500 taps.

As explained previously, the coupling shaft 23 is introduced in one orifice of the platform of the bottom basis 18, through an insert 35 to contact the driving mechanism located below the bottom platform 18.

The insert 35 is a wearing part, easy to change, without having to replace the entire bottom platform. Further, the inset 35 can include ball bearing to facilitate the upwards and downward movement of the coupling element, while reducing friction.

The wearing part 35 has a top flange to rely on the platform having a thickness higher than the height of the rim 6A of the second flange 6 of the coupling element. The rim 6A contribute to the umbrella effect of the coupling element. The rim 6A also ensure that the free fall of the vessel is terminated when the bottom wall of the vessel (first flange 9) in one block with the second flange 6 of the coupling element abuts the flange of the insert 35, creating a small shock, contributing to the tapping effect to the powder sample.

Accordingly, the driving mechanism is located under the vessel 5, below a bottom platform 18 on which said vessel 5 is located. The driving mechanism is connected to the vessel by the coupling shaft 23 provided for gliding through the orifice of said bottom platform 18 and for impairing a series of tap movements to the vessel.

While the vessel 5 is located on a bottom platform 18. The driving mechanism is preferably located in a separated cavity having as top wall, the bottom platform 18 upon which said vessel 5 is located. The bottom platform 18 is perforated for forming an orifice through which said coupling shaft 23 goes through to connect the vessel 5 to the driving mechanism. The coupling shaft 23 can glide through the orifice up and down upon action of the driving mechanism. The isolation of the driving mechanism in a separated cavity allows to prevent powder contamination of the driving mechanism which can impact negatively its proper operation, but also isolates the driving mechanism from the radiant heat originating from the warmed/cooled vessel 5.

The second flange 6 of the coupling element has a diameter greater than the shaft diameter and therefore than the orifice through which the shaft glide up and down when in movement upon operation of the driving mechanism and hence the second flange 6 forms additional protection against powder contamination of the driving mechanism, acting as an umbrella.

### Examples.-

### Example 1:

A sample of polyamide 2200 has been weighted and poured in the introduction tube before being poured in the vessel according to the introduction methodology described above.

The sample was heated at a temperature of 50°C.

A series of 500 tapping movement (free falls of 1 mm) have been applied during which the distance between the housing edge of the laser distance measuring device and the cover element was measured for each tap.

Each of the 500 density calculation have been performed by the processor, each density corresponding to a tapping movement, except the initial density.

The densities thereby calculated are shown on table 1 (for each 10 taps until 400 and then for 500 taps) but have been all plotted on a graph as shown in figure 9 towards the tapping movement duly perfomed (Curve D). Further, the Hausner ratio is calculated and shown in table 2.

### Example 2.-

Example 1 has been reproduced except that the powder sample was heated at a temperature of 75°C.

The densities thereby calculated are shown on table 1 (for each 10 taps until 400 and then for 500 taps) but have been all plotted on a graph as shown in figure 9 towards the tapping movement duly performed (Curve C). Further, the Hausner ratio is calculated and shown in table 2.

### Example 3.-

Example 1 has been reproduced except that the powder sample was heated at a temperature of 100°C.

The densities thereby calculated are shown on table 1 (for each 10 taps until 400 and then for 500 taps) but have been all plotted on a graph as shown in figure 9 towards the tapping movement duly performed (Curve B). Further, the Hausner ratio is calculated and shown in table 2.

### Example 4.-

Example 1 has been reproduced except that the powder sample was heated at a temperature of 125°C.

The densities thereby calculated are shown on table 1 (for each 10 taps until 400 and then for 500 taps) but have been all plotted on a graph as shown in figure 9 towards the tapping movement duly performed (Curve A). Further, the Hausner ratio is calculated and shown in table 2.

### Example 5.-

Example 1 has been reproduced except that the powder sample was kept at ambient temperature (22°C).

The densities thereby calculated are shown on table 1 (for each 10 taps until 400 and then for 500 taps) but have been all plotted on a graph as shown in figure 9 towards the tapping movement duly performed (Curve E). Further, the Hausner ratio is calculated and shown in table 2.

### Comparative example.-

Example 1 has been reproduced except that the powder sample was heated at 150°C.

The densities thereby calculated have been plotted on a graph as shown in figure 9 towards the tapping movement duly performed (Curve F).

**Table 1.-**

| **Taps** | **Ex. 5 (g/ml)** | **Ex. 1 (g/ml)** | **Ex. 2 (g/ml)** | **Ex. 3 (g/ml)** | **Ex. 4 (g/ml)** |
|---|---|---|---|---|---|
| | **T°C = 22°C** | **T°C = 50°C** | **T°C = 75°C** | **T°C = 100°C** | **T°C = 125°C** |
| 1 | 0,467 | 0,453 | 0,453 | 0,461 | 0,455 |
| 10 | 0,516 | 0,491 | 0,479 | 0,471 | 0,459 |
| 20 | 0,531 | 0,504 | 0,49 | 0,477 | 0,462 |
| 30 | 0,537 | 0,513 | 0,498 | 0,481 | 0,464 |
| 40 | 0,542 | 0,516 | 0,501 | 0,484 | 0,466 |
| 50 | 0,545 | 0,518 | 0,502 | 0,485 | 0,467 |
| 60 | 0,547 | 0,522 | 0,506 | 0,487 | 0,468 |
| 70 | 0,549 | 0,523 | 0,507 | 0,488 | 0,467 |
| 80 | 0,551 | 0,525 | 0,509 | 0,492 | 0,468 |
| 90 | 0,551 | 0,526 | 0,51 | 0,492 | 0,468 |
| 100 | 0,553 | 0,526 | 0,513 | 0,492 | 0,468 |
| 110 | 0,553 | 0,527 | 0,513 | 0,492 | 0,47 |
| 120 | 0,554 | 0,529 | 0,513 | 0,492 | 0,47 |
| 130 | 0,554 | 0,53 | 0,513 | 0,493 | 0,47 |
| 140 | 0,555 | 0,531 | 0,513 | 0,493 | 0,468 |
| 150 | 0,558 | 0,532 | 0,513 | 0,495 | 0,47 |
| 160 | 0,559 | 0,532 | 0,513 | 0,494 | 0,469 |
| 170 | 0,559 | 0,533 | 0,514 | 0,496 | 0,47 |
| 180 | 0,559 | 0,533 | 0,515 | 0,497 | 0,47 |
| 190 | 0,559 | 0,534 | 0,516 | 0,497 | 0,47 |
| 200 | 0,559 | 0,534 | 0,517 | 0,497 | 0,471 |
| 210 | 0,559 | 0,534 | 0,517 | 0,498 | 0,47 |
| 220 | 0,559 | 0,534 | 0,517 | 0,499 | 0,471 |
| 230 | 0,559 | 0,535 | 0,517 | 0,497 | 0,471 |
| 240 | 0,561 | 0,535 | 0,518 | 0,497 | 0,471 |
| 250 | 0,559 | 0,535 | 0,518 | 0,498 | 0,472 |
| 260 | 0,561 | 0,535 | 0,518 | 0,499 | 0,471 |
| 270 | 0,561 | 0,535 | 0,518 | 0,498 | 0,47 |
| 280 | 0,562 | 0,535 | 0,518 | 0,497 | 0,47 |
| 290 | 0,562 | 0,535 | 0,519 | 0,498 | 0,47 |
| 300 | 0,562 | 0,535 | 0,519 | 0,498 | 0,471 |
| 310 | 0,563 | 0,535 | 0,52 | 0,499 | 0,471 |
| 320 | 0,563 | 0,535 | 0,519 | 0,498 | 0,471 |
| 330 | 0,563 | 0,535 | 0,519 | 0,498 | 0,472 |
| 340 | 0,563 | 0,536 | 0,519 | 0,498 | 0,471 |
| 350 | 0,563 | 0,536 | 0,519 | 0,498 | 0,472 |
| 360 | 0,564 | 0,536 | 0,519 | 0,498 | 0,471 |
| 370 | 0,564 | 0,537 | 0,52 | 0,498 | 0,472 |
| 380 | 0,564 | 0,536 | 0,52 | 0,498 | 0,472 |
| 390 | 0,564 | 0,537 | 0,521 | 0,498 | 0,472 |
| 400 | 0,564 | 0,536 | 0,521 | 0,498 | 0,472 |
| 500 | 0,567 | 0,537 | 0,521 | 0,499 | 0,472 |

**Table 2.-**

| **Temp (°C)** | **rho0 (ρ0)** | **rho500 (ρ500)** | **Hr** |
|---|---|---|---|
| 22 | 0,467 | 0,567 | 1,214 |
| 50 | 0,453 | 0,537 | 1,185 |
| 75 | 0,453 | 0,521 | 1,150 |
| 100 | 0,461 | 0,499 | 1,082 |
| 125 | 0,455 | 0,472 | 1,037 |
| 150 | 0,463 | 0,465 | 1,004 |

As it can be seen, the device according to the present invention allows to measure bulk/tapped density very accurately for powder showing temperature sensitivity. However, for the sample of powder used in the example, at 150°C, the powder sample has encountered melting at the contact point between the grains and tapped density is very close to bulk density .

It should be understood that the present invention is not limited to the described embodiments and that variations can be applied without going outside of the scope of the appended claims.

For example, the present invention has been described as optimally operating at temperature between -80°C and 300°C. Of course, it is also contemplated within the present invention to use lower or higher temperature, provided the measuring device is not exposed to much to such temperature and impact from this latter.

Similarly, the horizontal plate has been described to be rotatable thanks to a motor, but it is obviously contemplated within the present invention to foresee a horizontal plate manually rotatable.

## Claims

1. Device for measuring bulk and/or tapped density comprising :
- a driving mechanism (31),
- a vessel (5) provided for containing a powder sample, said vessel (5) being provided to move up and down upon the operation of said driving mechanism (31), said vessel (5) having a predetermined section, preferably a substantially constant section over height,
- a distance measuring device (15) provided for measuring a distance between a first reference point (l1) and a second point (l2), wherein the second point represents the height of the powder sample in the vessel (5), and provided to output a signal containing c value of the distance to a processing unit,
- a temperature adjusting means (7) provided to cool or warm said vessel (5) in order to perform the density or distance measurement at a measurement temperature;
**characterized in that**,
- said distance measuring device (15) is a laser distance measuring device (15) provided to emit downwards a laser light ray having a predetermined direction,
- the laser distance measuring device is configured to measure the distance by laser triangulation.

2. Device according to claim 1, wherein the predetermined direction is vertical.

3. Device according to claim 1 or 2, wherein the laser distance measuring device (15) is arranged 150 mm or more from the second point, when measuring the distance between the first point (l1) and the second point (l2).

4. Device according to any of claims 1 to 3, wherein the laser distance measuring device (15) is configured to emit the laser ray and to receive the emitted laser ray reflected back from the second point (l2), wherein the laser distance measuring device (15) is configured to receive the reflected laser ray at different incidence angles and/or at different incidence positions, wherein the different incidence angles and/or different incidence positions indicate the distance between the first point (l1) and the second point (l2).

5. Device according to any of the claims 1 to 4, further comprising a housing (17) accommodating said vessel (5) and said measuring device (15) having a bottom surface (18).

6. Device according to any of the previous claims, wherein the temperature adjusting means (7) is arranged in the vessel (5).

7. Device according to the previous claim, wherein said temperature adjusting means (7) provided to cool or warm said vessel (5) comprises a cooling or heating jacket around a lateral wall of the vessel (5), preferably covered by an insulating layer (8).

8. Device according to any of the claims 1 to 7, comprising a processing unit connected to the laser distance measuring device (15), provided to receive the distance measurement (D) between the first reference point (l1) and the second point (l2) and provided to calculate a density of the powder sample based on the distance measurement (D), wherein the bulk density or the tapped density is determined from this calculated density.

9. Device according to the previous claim, wherein the density is calculated based on the predefined measurement temperature.

10. Device according to any of the claims 1 to 9, wherein the laser distance measuring device (15) is fixed on a support (1) connected to a vertical shaft, said support being able to rotate partially around one vertical axis in order to align the laser light axis with the second point and/or being vertically movable along said vertical shaft to adjust the height of the first reference point (11) with respect to the second point (l2).

11. Device according to any of the claims 1 to 10, further comprising a cover element (10) provided for being accommodated within said vessel(5), having a top (11a) and a bottom wall (11b) substantially flat and parallel one to each other, each section of said cover element (10) being at most lower than said predetermined section, preferably constant section of said vessel (5), said cover element (10) being provided to be placed upon said powder sample when located in the vessel (5), the top wall comprising the second point, said cover optionally comprises a target area, enclosing said second point.

12. Method for measuring automatically bulk and/or tapped density as well as packing dynamics of a powder sample comprising the steps of:
- Introducing a sample of a powder in a vessel (5),
- Measuring a distance (D) between a first reference point (11) and a second point (l2), said second point being provided for indicating the height of the sample of the powder within said vessel (5),
**characterized in that** said method further comprises a step of heating/cooling the vessel (5) in order to impair a predetermined temperature to said sample of the powder for measuring the distance (D) and **in that** said distance is made by a laser distance measuring device (15) emitting a laser light ray downwards, wherein the distance is measured by laser triangulation.

13. Method according to the previous claim comprising the steps of:
- A first measurement of a first distance between the first reference point (l1) and the second point (l2), said second point being provided for continuously indicating the height of the powder sample within said vessel (5), said first measurement step being provided for measuring the initial height of the powder sample in the vessel (5),
- Tapping said vessel (5) a series of n times in order to have the powder sample tapped within said vessel (5),
- a series of n measurements of a series of n distances between said reference point (level 11) and said second point (level l2).

14. Method according to claim 13, further comprising a step of calculating a density of the sample of powder based on the distance between the first reference point (l1) and the second point (l2), preferably calculating the bulk density from the first distance and/or calculating a tapped density from at least one of the n distances and/or plotting the measured n distances, the n heights of the sample of the powder in the vessel (5) determined based on the n measured distances, the n volumes of the sample of the powder in the vessel (5) determined based on the n measured distances or the n densities of the sample of the powder in the vessel (5) determined based on the n measured distances over the taps or time.

15. Method according to the previous claim, wherein a correction factor is applied to the density calculated based on a temperature measurement for taking into account the volume change of the vessel (5) upon the influence of the heating/cooling step.

16. Computer program configured, when executed on a processor, to:
- receive at least one distance measurement from a device for measuring a bulk density and/or a tapped density of a powder sample, according to any one of claims 1 to 11;
- calculate a bulk density and/or a tapped density based on the at least one distance measurement received;
**characterized in that** the received distance is measured by laser triangulation and the computer program is further configured to
- receive at least one measurement temperature of powder sample; and
- calculate the bulk density and/or the tapped density based on the received measurement temperature of the powder sample.

## Patentansprüche

1. Vorrichtung zur Messung der Schütt- und/oder Stampfdichte, das umfasst:
- einen Antriebsmechanismus (31),
- ein Gefäß (5), das dafür vorgesehen ist, eine Pulverprobe zu enthalten, wobei das Gefäß (5) dafür vorgesehen ist, sich bei der Betätigung des Antriebsmechanismus (31) auf und ab zu bewegen, wobei das Gefäß (5) einen vorbestimmten Querschnitt, vorzugsweise einen über die Höhe im Wesentlichen konstanten Querschnitt, aufweist,
- eine Entfernungsmessvorrichtung (15), die zum Messen eines Abstands zwischen einem ersten Bezugspunkt (11) und einem zweiten Punkt (12) vorgesehen ist, wobei der zweite Punkt die Höhe der Pulverprobe in dem Behälter (5) darstellt, und dafür vorgesehen ist, ein Signal, das einen Wert des Abstands enthält, an eine Verarbeitungseinheit auszugeben,
- ein Temperatureinstellmittel (7), das dafür vorgesehen ist, das Gefäß (5) zu kühlen oder zu erwärmen, um die Dichte- oder Abstandsmessung bei einer Messtemperatur durchzuführen;
**dadurch gekennzeichnet, dass**,
- die Entfernungsmessvorrichtung (15) eine Laserentfernungsmessvorrichtung (15) ist, die dafür vorgesehen ist, einen Laserlichtstrahl mit einer vorbestimmten Richtung nach unten zu emittieren,
- die Laserentfernungsmessvorrichtung dafür konfiguriert ist, die Entfernung durch Lasertriangulation zu messen.

2. Vorrichtung nach Anspruch 1, wobei die vorbestimmte Richtung vertikal ist.

3. Vorrichtung nach Anspruch 1 oder 2, wobei die Laserentfernungsmessvorrichtung (15) bei der Messung der Entfernung zwischen dem ersten Punkt (11) und dem zweiten Punkt (12) 150 mm oder mehr vom zweiten Punkt ausgelegt ist.

4. Vorrichtung nach einem der Ansprüche 1 bis 3, wobei die Laserentfernungsmessvorrichtung (15) dafür konfiguriert ist, den Laserstrahl zu emittieren und den emittierten Laserstrahl zu empfangen, der von dem zweiten Punkt (12) zurück reflektiert wird, wobei die Laserentfernungsmessvorrichtung (15) dafür konfiguriert ist, den reflektierten Laserstrahl unter verschiedenen Einfallswinkeln und/oder an verschiedenen Einfallspositionen zu empfangen, wobei die unterschiedlichen Einfallswinkel und/oder die unterschiedlichen Einfallspositionen den Abstand zwischen dem ersten Punkt (11) und dem zweiten Punkt (12) angeben.

5. Vorrichtung nach einem der Ansprüche 1 bis 4, die ferner ein Gehäuse (17) umfasst, das den Behälter (5) und die Messvorrichtung (15) mit einer Bodenfläche (18) aufnimmt.

6. Vorrichtung nach einem der vorhergehenden Ansprüche, wobei das Temperatureinstellmittel (7) in dem Gefäß (5) ausgelegt ist.

7. Vorrichtung nach dem vorhergehenden Anspruch,
wobei das Temperatureinstellmittel (7), das zum Kühlen oder Erwärmen des Gefäßes (5) vorgesehen ist, einen Kühl- oder Heizmantel um eine Seitenwand des Gefäßes (5) umfasst, der vorzugsweise von einer Isolierschicht (8) bedeckt ist.

8. Vorrichtung nach einem der Ansprüche 1 bis 7, die eine mit der Laserentfernungsmessvorrichtung (15) verbundene Verarbeitungseinheit umfasst, die dafür vorgesehen ist, die Abstandsmessung (D) zwischen dem ersten Bezugspunkt (11) und dem zweiten Punkt (12) zu empfangen und basierend auf der Abstandsmessung (D) eine Dichte der Pulverprobe zu berechnen, wobei die Schüttdichte oder die Stampfdichte aus dieser berechneten Dichte bestimmt wird.

9. Vorrichtung nach dem vorhergehenden Anspruch,
wobei die Dichte basierend auf der vordefinierten Messtemperatur berechnet wird.

10. Vorrichtung nach einem der Ansprüche 1 bis 9,
wobei das Laserentfernungsmessvorrichtung (15) an einem Träger (1) befestigt ist, der mit einer vertikalen Welle verbunden ist, wobei der Träger in der Lage ist, sich teilweise um eine vertikale Achse zu drehen, um die Laserlichtachse auf den zweiten Punkt auszurichten und/oder entlang der vertikalen Welle vertikal beweglich ist, um die Höhe des ersten Bezugspunktes (11) in Bezug auf den zweiten Punkt (12) einzustellen.

11. Vorrichtung nach einem der Ansprüche 1 bis 10,
die ferner ein Abdeckelement (10) umfasst, das dafür vorgesehen ist, in dem Gefäß (5) untergebracht zu werden, und das eine Oberseite (11a) und eine Unterseite (11b) aufweist, die im Wesentlichen flach und parallel zueinander sind, wobei jeder Abschnitt des Abdeckelements (10) höchstens niedriger ist als der vorbestimmte, vorzugsweise konstante, Abschnitt des Gefäßes (5), wobei das Abdeckelement (10) dafür vorgesehen ist, auf die Pulverprobe gelegt zu werden, wenn es sich in dem Gefäß (5) befindet, wobei die obere Wand den zweiten Punkt umfasst, wobei die Abdeckung optional einen Zielbereich umfasst, der den zweiten Punkt umschließt.

12. Verfahren zur automatischen Messung der Schütt- und/oder Stampfdichte sowie der Packungsdynamik einer Pulverprobe, das folgende Schritte umfasst:
- Einbringen einer Pulverprobe in ein Gefäß (5),
- Messen eines Abstands (D) zwischen einem ersten Bezugspunkt (11) und einem zweiten Punkt (12), wobei der zweite Punkt dafür vorgesehen ist, die Höhe der Probe des Pulvers innerhalb des Gefäßes (5) anzuzeigen,
**dadurch gekennzeichnet, dass** das Verfahren ferner einen Schritt des Erhitzens/Kühlens des Gefäßes (5) umfasst, um die Pulverprobe auf eine vorbestimmte Temperatur zu bringen, um den Abstand (D) zu messen, und dass der Abstand mit einer Laserentfernungsmessvorrichtung (15) gemessen wird, die einen Laserlichtstrahl nach unten aussendet, wobei der Abstand durch Lasertriangulation gemessen wird.

13. Verfahren nach dem vorhergehenden Anspruch, das folgende Schritte umfasst:
- eine erste Messung eines ersten Abstandes zwischen dem ersten Bezugspunkt (11) und dem zweiten Punkt (12), wobei der zweite Punkt zur kontinuierlichen Anzeige der Höhe der Pulverprobe innerhalb des Gefäßes (5) vorgesehen ist, wobei der erste Messschritt zur Messung der Anfangshöhe der Pulverprobe im Gefäß (5) vorgesehen ist,
- Abklopfen des Gefäßes (5) eine Reihe von n-mal, damit die Pulverprobe in dem Gefäß (5) abgeklopft wird,
- eine Reihe von n Messungen einer Reihe von n Abständen zwischen dem Bezugspunkt (Niveau 11) und dem zweiten Punkt (Niveau 12).

14. Verfahren nach Anspruch 13, das ferner einen Schritt zur Berechnung einer Dichte der Pulverprobe basierend auf dem Abstand zwischen dem ersten Bezugspunkt (l1) und dem zweiten Punkt (12) umfasst, vorzugsweise Berechnen der Schüttdichte aus dem ersten Abstand und/oder Berechnen einer Stampfdichte aus mindestens einem der n Abstände und/oder Auftragen der gemessenen n Abstände, wobei die n Höhen der Probe des Pulvers in dem Gefäß (5) basierend auf den n gemessenen Abständen bestimmt werden, wobei die n Volumina der Probe des Pulvers in dem Gefäß (5) basierend auf den n gemessenen Abständen oder den n Dichten der Probe des Pulvers in dem Gefäß (5) bestimmt werden, die basierend auf den n gemessenen Abständen über die Abstiche oder die Zeit bestimmt werden.

15. Verfahren nach dem vorhergehenden Anspruch,
wobei auf die auf Basis einer Temperaturmessung berechnete Dichte ein Korrekturfaktor angewandt wird, um die Volumenänderung des Gefäßes (5) unter dem Einfluss des Erhitzungs-/Kühlungsschritts zu berücksichtigen.

16. Computerprogramm, das, wenn es auf einem Prozessor ausgeführt wird, für Folgendes konfiguriert ist:
- Empfangen mindestens einer Abstandsmessung von einer Vorrichtung zur Messung einer Schüttdichte und/oder einer Stampfdichte einer Pulverprobe nach einem der Ansprüche 1 bis 11;
- Berechnen einer Schüttdichte und/oder einer Stampfdichte basierend auf der mindestens einen empfangenen Abstandsmessung;
**dadurch gekennzeichnet, dass** der empfangene Abstand durch Lasertriangulation gemessen wird und das Computerprogramm ferner für Folgendes konfiguriert ist:
- Empfangen mindestens einer Messtemperatur der Pulverprobe; und
- Berechnen der Schüttdichte und/oder der Stampfdichte basierend auf der empfangenen Messtemperatur der Pulverprobe.

## Revendications

1. Dispositif de mesure de masse volumique apparente et/ou après tassement comprenant :
- un mécanisme d'entraînement (31),
- un récipient (5) prévu pour contenir un échantillon de poudre, ledit récipient (5) étant prévu pour se déplacer vers le haut et vers le bas lors de l'opération dudit mécanisme d'entraînement (31), ledit récipient (5) présentant une section prédéterminée, de préférence une section sensiblement constante sur la hauteur,
- un dispositif de mesure de distance (15) prévu pour mesurer une distance entre un premier point de référence (l1) et un second point (l2), et prévu pour délivrer en sortie un signal contenant une valeur de la distance à une unité de traitement,
- un moyen d'ajustement de température (7) prévu pour refroidir ou réchauffer ledit récipient (5) afin d'effectuer la mesure de masse volumique ou de distance à une température de mesure ;
**caractérisé en ce que**, ledit dispositif de mesure de distance (15) est un dispositif de mesure de distance (15) laser prévu pour émettre vers le bas un rayon de lumière laser présentant une direction prédéterminée.

2. Dispositif selon la revendication 1, dans lequel la direction prédéterminée est verticale.

3. Dispositif selon la revendication 1 ou 2, dans lequel le dispositif de mesure de distance (15) laser est agencé à 150 mm ou plus du second point, lors de la mesure de la distance entre le premier point (11) et le second point (l2).

4. Dispositif selon l'une quelconque des revendications 1 à 3, dans lequel le dispositif de mesure de distance (15) laser est configuré pour émettre le rayon laser et pour recevoir le rayon laser émis réfléchi par le second point (l2), dans lequel le dispositif de mesure de distance (15) laser est configuré pour recevoir le rayon laser réfléchi à différents angles d'incidence et/ou à différentes positions d'incidence, dans lequel les différents angles d'incidence et/ou différentes positions d'incidence indiquent la distance entre le premier point (l1) et le second point (l2).

5. Dispositif selon l'une quelconque des revendications 1 à 4, comprenant en outre un logement (17) recevant ledit récipient (5) et ledit dispositif de mesure (15) présentant une surface inférieure (18).

6. Dispositif selon l'une quelconque des revendications précédentes, dans lequel le moyen d'ajustement de température (7) est agencé dans le récipient (5).

7. Dispositif selon la revendication précédente, dans lequel ledit moyen d'ajustement de température (7) prévu pour refroidir ou réchauffer ledit récipient (5) comprend une chemise de refroidissement ou de chauffage autour d'une paroi latérale du récipient (5), de préférence recouverte par une couche isolante (8).

8. Dispositif selon l'une quelconque des revendications 1 à 7, comprenant une unité de traitement connectée au dispositif de mesure de distance (15) laser, prévue pour recevoir la mesure de distance (D) entre le premier point de référence (l1) et le second point (l2) et prévue pour calculer une masse volumique de l'échantillon de poudre sur la base de la mesure de distance (D), dans lequel la masse volumique apparente ou la masse volumique après tassement est déterminée à partir de cette masse volumique calculée.

9. Dispositif selon la revendication précédente, dans lequel la masse volumique est calculée sur la base de la température de mesure prédéfinie.

10. Dispositif selon l'une quelconque des revendications 1 à 9, dans lequel le dispositif de mesure de distance (15) laser est fixé sur un support (1) connecté à un arbre vertical, ledit support étant apte à tourner partiellement autour d'un axe vertical afin d'aligner l'axe de la lumière laser avec le second point et/ou étant mobile verticalement le long dudit arbre vertical pour ajuster la hauteur du premier point de référence (l1) par rapport au second point (l2).

11. Dispositif selon l'une quelconque des revendications 1 à 10, comprenant en outre un élément (10) de couvercle prévu pour être reçu à l'intérieur dudit récipient (5), présentant une paroi supérieure (1 1a) et une paroi inférieure (11b) sensiblement plates et parallèles l'une à l'autre, chaque section dudit élément (10) de couvercle étant au plus inférieure à ladite section prédéterminée, de préférence une section constante dudit récipient (5), ledit élément (10) de couvercle étant prévu pour être placé sur ledit échantillon de poudre lorsqu'il est situé dans le récipient (5), la paroi supérieure comprenant le second point, ledit couvercle comprend facultativement une zone cible, renfermant ledit second point.

12. Procédé de mesure automatique de la masse volumique apparente et/ou après tassement ainsi que de la dynamique de compactage d'un échantillon de poudre comprenant les étapes de :
- Introduction d'un échantillon d'une poudre dans un récipient (5),
- Mesure d'une distance (D) entre un premier point de référence (l1) et un second point (l2), ledit second point étant prévu pour indiquer la hauteur de l'échantillon de la poudre à l'intérieur dudit récipient (5),
**caractérisé en ce que** ledit procédé comprend en outre une étape de chauffage/refroidissement du récipient (5) afin de conférer une température prédéterminée audit échantillon de la poudre pour mesurer la distance (D) et **en ce que** ladite distance est effectuée par un dispositif de mesure de distance (15) laser émettant un rayon de lumière laser vers le bas.

13. Procédé selon la revendication précédente comprenant les étapes de :
- Une première mesure d'une première distance entre le premier point de référence (l1) et le second point (l2), ledit second point étant prévu pour indiquer de manière continue la hauteur de l'échantillon de poudre à l'intérieur dudit récipient (5), ladite première étape de mesure étant prévue pour mesurer la hauteur initiale de l'échantillon de poudre dans le récipient (5),
- Tapotage dudit récipient (5) une série de n fois afin d'avoir l'échantillon de poudre tassé à l'intérieur dudit récipient (5),
- une série de n mesures d'une série de n distances entre ledit point de référence (niveau l1) et ledit second point (niveau l2).

14. Procédé selon la revendication 13, comprenant en outre une étape de calcul d'une masse volumique de l'échantillon de poudre sur la base de la distance entre le premier point de référence (l1) et le second point (l2), de préférence en calculant la masse volumique apparente à partir de la première distance et/ou en calculant une masse volumique après tassement à partir d'au moins l'une des n distances et/ou en reportant les n distances mesurées, les n hauteurs de l'échantillon de la poudre dans le récipient (5) déterminées sur la base des n distances mesurées, les n volumes de l'échantillon de la poudre dans le récipient (5) déterminés sur la base des n distances mesurées ou les n masses volumiques de l'échantillon de la poudre dans le récipient (5) déterminées sur la base des n distances mesurées au cours des tapotements ou du temps.

15. Procédé selon la revendication précédente, dans lequel un facteur de correction est appliqué à la masse volumique calculée sur la base d'une mesure de température pour prendre en compte le changement de volume du récipient (5) sur l'influence de l'étape de chauffage/refroidissement.

16. Programme informatique configuré, lorsqu'il est exécuté sur un processeur, pour :
- recevoir au moins une mesure de distance à partir d'un dispositif de mesure d'une masse volumique apparente et/ou d'une masse volumique après tassement d'un échantillon de poudre ;
- calculer une masse volumique apparente et/ou une masse volumique après tassement sur la base de l'au moins une mesure de distance reçue ;
**caractérisé en ce que** le programme informatique est en outre configuré pour
- recevoir au moins une température de mesure d'échantillon de poudre ; et
- calculer la masse volumique apparente et/ou la masse volumique après tassement sur la base de la température de mesure reçue de l'échantillon de poudre.
